# EUROPEAN PATENT APPLICATION

(11) **EP 4 682 791 A1**
(43) Date of publication of application: **21.01.2026**
(21) Application number: 24189040.9
(22) Date of filing: 17.07.2024
(51) Int. Cl.: G06Q 10/063, G06Q 10/10, H05B 45/00, H05B 47/00

(54) **ANALYZING USAGE OF CAPACITIES OF LIGHTING SYSTEM COMPONENTS IN A LIGHTING SYSTEM**

(71) Applicant: Tridonic GmbH & Co KG, 6850 Dornbirn (AT)
(72) Inventor: Schmölzer, Andreas, 6851 Dornbirn (AT); Zengerle, Thomas, 6851 Dornbirn (AT); Stark, Stefan, 6851 Dornbirn (AT); Hüttinger, Ulrich, 6851 Dornbirn (AT)
(74) Representative: Rupp, Christian

(57) **Abstract**

The invention refers to a method for analyzing the usage of the capacities of at least one lighting system component installed in a lighting system, the method comprising the steps of:
- Analyzing the usage workload of the at least one component expressed on at least one physical parameter in order to produce usage patterns data of said existing lighting system, said data including at least one of but not limited to, operational schedules, power consumption profiles, environmental conditions, and user preferences, and
- Producing a file containing the thus generated usage pattern data.

## Description

### 1. Field of the invention

The present invention is directed to a method for analyzing the usage profile of at least one lighting system component installed in a lighting system. The invention is further directed to a method of automatically generating a tender profile of a lighting system using such a method for analyzing.

### 2. Technical background

Creating tender texts usually involves a lot of manual work rather than using automatic methods. People might not know much about the target application, only having basic information and not knowing all the specific behaviors or details of the application. Because of this, the suggested solutions of the prior art may not be the most cost-effective ones.

### 3. Summary

It is thus an object of the present invention to provide a method for analyzing the usage of the capacities of at least one lighting system component installed in a lighting system that is capable to reduce efforts and costs to obtain an extensive overview of the lighting system and the at least one component thereof as a whole. The invention is further directed to a method of generating a tender profile of a lighting system using such a method for analyzing in an easy and cost-effective manner in order to facilitate generating a cost-effective tender profile of a future lighting system.

The problem is tackled by automatically generating tender text using a building's usage pattern, including factors like active power, dim level, and LED current over time. Since the tender text must be created before the building's lighting system is operational, data from a similar building's usage is employed.

Automated tender text creation provides an opportunity to pinpoint the most cost-effective product based on actual application needs. It streamlines the selection of the correct and most cost-effective products.

Additionally, the method of the invention can analyze whether the installation uses the most cost- effective drivers. The system suggests cost-effective driver options and compares them with the current drivers in the installation. This can unveil potential cost savings for lighting installation maintenance, such as replacing expensive drivers with more economical versions.

The invention is directed to analyzing existing lighting systems in use. In particular, analyzing the concrete functions of the lighting systems used over a period of time.

From this analysis and the automated evaluation thereof, a usage-profile can be derived that can automatically create a tender text according to the invention.

According to a first aspect of the invention a method for analyzing the usage profile of at least one lighting system component installed in a lighting system, is provided comprising the steps of:
Analyzing the usage workload of the at least one component expressed on at least one physical parameter in order to produce usage patterns data of said existing lighting system, said data including at least one of but not limited to, operational schedules, power consumption profiles, environmental conditions, and user preferences, and Producing a file containing the thus generated usage pattern data.

The usage profile of a lighting system component may encompass data as how and when, and where the lighting system component is utilized over a specific period. It includes various aspects of the system's operation and usage patterns. Here are some examples of a usage profile for a lighting system component:
Operational Hours: This indicates the total number of hours the lighting system component is in operation within a given time frame. Understanding the operational hours helps in assessing energy consumption and maintenance requirements.
Intensity Levels: It refers to the brightness or dimness of the light emitted by the system at different times. Monitoring intensity levels can provide insight into the system's performance and potential adjustments needed for better lighting quality or energy efficiency.
Usage Patterns: This includes information on when the lighting system component is most frequently used, such as peak hours during the day or night. Analyzing usage patterns helps in optimizing energy usage and identifying any inconsistencies or inefficiencies in the system's operation.
User Behavior: Factors like user preferences, occupancy patterns, and manual control of the lighting system component can also be part of the usage profile. Insight into user behavior helps in tailoring the lighting system component to meet specific requirements and enhance user experience.

By utilizing machine learning algorithms, correlations between usage patterns data and external factors such as time of day, occupancy levels, and ambient light conditions are identified.

According to another aspect of the invention, a method of automatically generating a tender profile is provided, comprising the steps of:
- producing the file for an existing installed lighting system using the method as explained above, and
- converting, via computing means, the data of the file into a tender profile for a future lighting system.

According to the invention, the usage patterns data include the physical parameters including at least one of but not limited to:
dim level, LED current and voltage, frequency, absorbed input power, emitted output power, power efficiency, power factor, service parameter as e.g. overload detection, excess voltage detection, power line excess voltage detection, power line low voltage detection, LED excess voltage detection, LED low voltage detection, LED overload detection, LED shortcut detection, high temperature detection, color temperature, number of starts, and/or
more system specific parameter of LED drivers as internal switching frequencies, detection of limits of parameters, data concerning life circle as for example LED driver life circle or LED driver degradation rate, and/or
operational schedules, power consumption profiles, environmental conditions, and user preferences.

According to the invention, the analyzing can be conducted using respective sensors in the lighting system and associated with the at least one lighting system component, wherein the analyzing of the physical parameters preferably uses DALI2 standard.

The usage patterns data can be fed via an interface into a database of a manufacturer of lighting systems in order to check availability and/or compatibility of the at least one component.

According to a preferred embodiment of the method of the invention, a plurality of existing lighting systems is analyzed in order to use the resulting usage patterns data for machine learning of neuronal networks, wherein data output of the neuronal networks are preferably used as tender profile.

Preferably a plurality of existing lighting systems are analyzed creating tender profiles for future lighting systems, whereby it is realized if specific features have been used in existing lighting systems and, if not, these features are omitted as useless in future lighting systems.

The method according to the invention may include the steps of wirelessly transferring said usage patterns data to a remote server,
retrieving, from the remote server, configuration data corresponding to said usage patterns data,
providing a future lighting system, and
implementing said configuration data in the future lighting system, such that the future lighting system substantially emulates the existing lighting system.

Said retrieving of configuration data can comprise searching for said dynamic information in a database containing configuration files.

According to another aspect of the invention, the usage patterns data can be fed via an interface into a database of a manufacturer of lighting systems in order to check availability and/or compatibility of respective components.

As mentioned, the invention may include analyzing physical parameters of LED drivers, e.g. according to DALI2 standard or other suitable standards as well. These parameters are used for the better analysis and understanding of more detailed conditions of use of a lighting system and thus reveal and enhance the efficient potentials of use, significantly.

### For example:

In case the LED only uses 50% of the maximum power, this results in a reduced scooping out of performance that can be analyzed.

Or, if it is analyzed that there is no dimming of the lighting system at all, in future a non-dimmable control unit/driver can be used that is cheaper. Otherwise, an intelligent light management system with enhanced sensors can be installed to enhance efficient usage of the lighting assembly.

All these measures can help to reduce power consumption, decreasing operating costs and minimizing CO2 footprint. In addition, this can help to obtain most relevant certificates of construction and system.

Moreover, different "user profiles" of a plurality of project data can be integrated and trained in a system of AI (artificial intelligence), thus providing most efficient lighting components up to complete lighting system management.

The system according to the invention can input data into the product selection tool for automatic device selection (e.g., Tridonic set builder). The tool outputs the best fit (i.e. most cost-effective). With this information, a tool generates tender texts accordingly.

Here some scenarios where the tool is used for an existing installation to choose the most cost- effective replacement:
* The component was never dimmed, and for this application, a non-dimmable component may also be suitable.
* The installed component always operates at 20%, and in the future, a converter with lower power could be installed.

Thus, according to the invention usage patterns data, in particular about usage and history of the at least one component in the LED lighting assembly, can be collected and analyzed by the manufacturer or a service partner, e.g. a wholesaler, in order to determine the configuration of the LED lighting assembly.

The invention also relates to a method for analyzing the actual usage history of the capacities of lighting system components comprising:
- Collecting data on the operational hours and intensity levels of individual lighting system components,
- Analyzing the collected data to determine the historical usage patterns and trends of each lighting system components,
- Identifying any discrepancies between the designed capacities of the components and their actual usage history,
- Generating reports or visualizations based on the analysis to provide insights into the performance and efficiency of the lighting system components, and
- Utilizing the findings to optimize the maintenance schedule, replacement strategy, or design considerations for the analyzed or future lighting system components.

In the present disclosure, the words "comprise", "include", "have" and their derivatives are to be interpreted inclusively rather than exclusively. The term "and/or" used in the context of "X and/or Y" should be interpreted as "X," or "Y," or "X and Y."

### 4. Brief description of drawings

Further features, details and advantages of the present invention are described hereinafter, in particular in relation to the appended figure, which illustrate some of the afore-described objects, embodiments and implementations thereof, and in which:
- Fig. 1: is a symbolic representation showing a LED lighting system according to an embodiment; and
- Fig. 2: shows a schematic flowchart of a method for analyzing and retrieving information for configuring a lighting system with identical usage pattern and at least one identical component according to an embodiment of the invention.

### 5. Detailed description

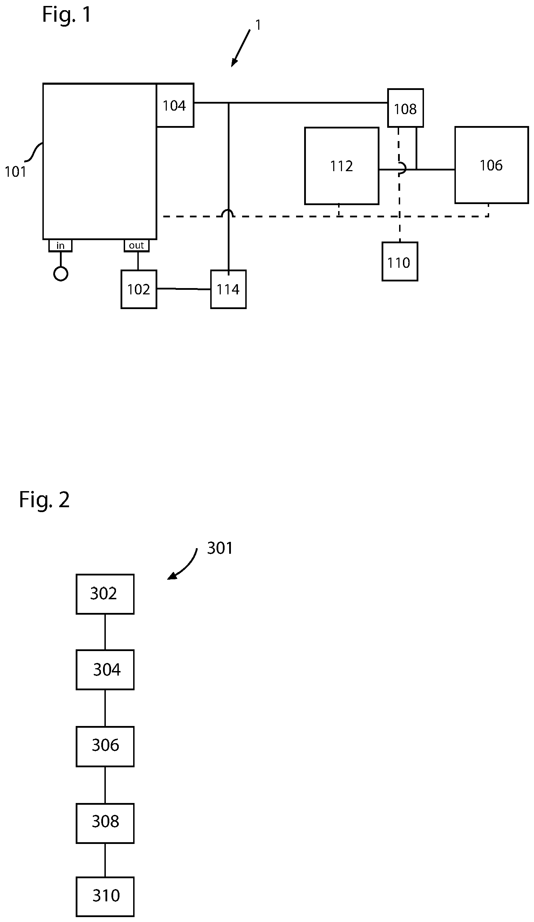

Fig.1 shows a LED lighting system 1. A driving module 101, which may for example be a LED driver, is configured for driving a drivable circuit being a component 102, which may for example be a LED module having a string of several LEDs.

The driving module 101 is configured for controlling some parameters of a driving current that is supplied to the drivable circuit being the component 102, e.g. a LED array, of the lighting system 1. For example, the driving module 101 may control the voltage, intensity, frequency, pulse width and/or phase of the driving current. For controlling the driving current, the driving module 101 may comprise a control unit 104, for example an integrated circuit.

The driving module 101 may further comprise an output terminal OUT, which may be connected with the drivable circuit/component 102, and an input terminal IN, which may be connected with the mains grid.

There is at least one sensor 114 to analyze physical parameters of the lighting system 1**.**

There can be a plurality of such sensors 114. Preferably, a respective sensor 114 is associated with at least one of the components 102 of the lighting system 1**.** However, sensors 114 can also be stand-alone sensors 114 without associated components 102 to sense e.g. brightness of ambient light.

The usage patterns data include the physical parameters including at least one of but not limited to:
dim level, LED current and voltage, frequency, absorbed input power, emitted output power, power efficiency, power factor, service parameter as e.g. overload detection, excess voltage detection, power line excess voltage detection, power line low voltage detection, LED excess voltage detection, LED low voltage detection, LED overload detection, LED shortcut detection, high temperature detection, color temperature, number of starts, and/or
more system specific parameter of LED drivers as internal switching frequencies, detection of limits of parameters, data concerning life circle as for example LED driver life circle or LED driver degradation rate, and/or
operational schedules, power consumption profiles, environmental conditions, and user preferences.

An analyzing method 301 according to Fig. 2 may be performed for retrieving information for configuring the lighting system 1 with identical usage pattern and at least one identical component 102 including the steps of
- (302) identifying the installed components 102,
- (304) transferring said usage patterns data to a remote server 106,
- (306) retrieving, from the remote server 106, configuration data corresponding to said usage patterns data,
- (308) providing a future lighting system, and
- 310) implementing said configuration data in the future lighting system, such that the future lighting system substantially emulates the existing lighting system.

Said retrieving of configuration data comprises: searching for said dynamic information in a database 108 containing configuration files.

With such a method 301 it is also possible to automatically generate a tender profile according to one aspect of the invention comprising the steps of:
- producing the file for an existing installed lighting system 1 in accordance with method 301, and
- converting, via computing means 112, the data of the file into a tender profile for a future lighting system.

The database 106 can be integrated in the remote server 106 or in the computing means 112. Also, the computing means 112 and the remote server 106 may be integrated.

The control unit 104 of the lighting system 1 is configured to control at least one of but not limited to: voltage, intensity, frequency, pulse width and/or phase of a driving current to be supplied to the at least one component the lighting system 1**.**

Besides, a manufacturer 110 may collect and analyze the usage patterns data about usage and history of the LED lighting assembly 101 to determine the configuration of the lighting system and the cause of its failure, which the manufacturer 110 can transmit to the user of the LED lighting assembly 101.

The invention defined in the appended claims is not limited to the afore-described objects, aspects, embodiments and implementations, most of which may be combined.

## Claims

1. A method for analyzing the usage of at least one lighting system component (102) installed in a lighting system (1), the method comprising the steps of:
Analyzing the usage workload of the at least one component (102) expressed in at least one physical parameter in order to produce usage patterns data of said existing lighting system (1), said data including at least one of but not limited to, operational schedules, power consumption profiles, environmental conditions, and user preferences, and
Producing a file containing the thus generated usage pattern data.

2. The method of claim 1, further comprising the step of:
Utilizing machine learning algorithms to identify correlations between usage patterns data and external factors such as time of day, occupancy levels, and ambient light conditions.

3. A method of automatically generating a tender profile, comprising the steps of:
- producing the file for an existing installed lighting system (1) using the method of claim 1 or 2, and
- converting, via computing means (112), the data of the file into a tender profile for a future lighting system.

4. The method according to claim 1 to 3, wherein the usage patterns data include the physical parameters including at least one of but not limited to:
dim level, LED current and voltage, frequency, absorbed input power, emitted output power, power efficiency, power factor, service parameter as e.g. overload detection, excess voltage detection, power line excess voltage detection, power line low voltage detection, LED excess voltage detection, LED low voltage detection, LED overload detection, LED shortcut detection, high temperature detection, color temperature, number of starts, and/or
more system specific parameter of LED drivers as internal switching frequencies, detection of limits of parameters, data concerning life circle as for example LED driver life circle or LED driver degradation rate, and/or
operational schedules, power consumption profiles, environmental conditions, and user preferences.

5. The method according to any one of the preceding claims, wherein the analyzing is conducted using respective sensors (114) in the lighting system (1) and associated with the at least one lighting system component (102).

6. The method according to any one of the preceding claims, wherein the analyzing of the physical parameters uses DALI2 standard.

7. The method according to any one of the preceding claims, wherein the usage patterns data are fed via an interface into a database (108) of a manufacturer (110) of lighting systems in order to check availability and/or compatibility of the at least one component (102).

8. The method according to any one of the preceding claims, wherein a plurality of existing lighting systems is analyzed in order to use the resulting usage patterns data for machine learning of neuronal networks, wherein data output of the neuronal networks are preferably used as tender profile.

9. The method according to any one of the preceding claims, wherein a plurality of existing lighting systems are analyzed creating tender profiles for future lighting systems, whereby it is realized if specific features have been used in existing lighting systems and, if not, these features are omitted as useless in future lighting systems.

10. The method according to any one of the preceding claims, including the steps of transferring said usage patterns data to a remote server (106),
- retrieving, from the remote server, configuration data corresponding to said usage patterns data,
- providing a future lighting system, and
- implementing said configuration data in the future lighting system, such that the future lighting system substantially emulates the existing lighting system.

11. The method according to claim 10, wherein said retrieving of configuration data comprises: searching for said dynamic information in the database (108) containing configuration files.

12. The method according to any one of the preceding claims, wherein a control unit (104) of the lighting system (1) is configured to control at least one of but not limited to: voltage, intensity, frequency, pulse width and/or phase of a driving current to be supplied to the at least one component (102) the lighting system (1).

13. A system comprising a lighting system component and a remote server, arrange to implement a method according to any of the preceding claims.

14. A method for analyzing the actual usage history of a lighting system component comprising:
- Collecting data on the operational hours and intensity levels of individual lighting system components,
- Analyzing the collected data to determine the historical usage patterns and trends of each lighting system components,
- Identifying any discrepancies between the designed capacities of the components and their actual usage history,
- Generating reports or visualizations based on the analysis to provide insights into the performance and efficiency of the lighting system components, and
- Utilizing the findings to optimize the maintenance schedule, replacement strategy, or design considerations for the analyzed or future lighting system components.
